# DEMANDE DE BREVET EUROPEEN

(11) **EP 3 944 993 A1**
(43) Date de publication de la demande: **02.02.2022**
(21) Numéro de dépôt: 21187870.7
(22) Date de dépôt: 27.07.2021
(51) Int. Cl.: B60R 13/08

(54) **SYSTÈME DE FIXATION D'UN ÉCRAN DE PROTECTION ACOUSTIQUE SOUS UN VÉHICULE AUTOMOBILE**

(30) Priorité: 30.07.2020 FR 2008109
(71) Demandeur: TREVES PRODUCTS, SERVICES & INNOVATION, 75008 Paris (FR)
(72) Inventeur: DREZET, David, 75008 Paris (FR); MARTINS, Carlos, 75008 Paris (FR); RIBES, Stéphane, 75008 Paris (FR)
(74) Mandataire: Sayettat, Julien Christian

(57) **Abrégé**

L'invention concerne un système (1) de fixation d'un écran de protection acoustique sous un véhicule automobile, ledit système comprenant une zone de fixation (3) dudit écran pourvue d'un orifice (4), une rondelle inférieure (5) et une rondelle supérieure (10) pourvues de moyens d'emboitement réciproques (11) issus de matière, de manière à former des rondelles emboitables, lesdits moyens assurant leur fixation l'une à l'autre au travers dudit orifice, de sorte que lesdites rondelles emboitables une fois emboitées forment un élément intermédiaire de fixation logeant ladite zone de fixation entre lesdites rondelles, l'épaisseur (14) de ladite zone de fixation étant inférieure à l'écart (15) entre lesdites rondelles, de manière à permettre un débattement vertical, ledit élément présentant au niveau dudit orifice une section (16) moindre que la taille (17) dudit orifice, de manière à permettre un débattement horizontal.

## Description

L'invention concerne un système de fixation d'un écran de protection acoustique sous un véhicule automobile, une architecture de montage d'un tel écran et un écran équipé pour une telle architecture

Il est connu de réaliser un système de fixation d'un écran de protection acoustique sous un véhicule automobile, ledit système comprenant successivement, de haut en bas :
- une embase mobile - par exemple sous forme de train arrière roulant -, destinée à être solidarisée à la caisse dudit véhicule de manière à pouvoir débattre dans toutes les directions,
- une zone dudit écran formant zone de fixation, ladite zone étant pourvue d'un orifice,
- une rondelle inférieure s'étendant en face inférieure dudit écran autour dudit orifice,
- un organe allongé de fixation dudit écran à ladite embase, ledit organe présentant une première extrémité fixée sur ladite embase et une deuxième extrémité pourvue d'une collerette prenant appui sur ladite rondelle inférieure.

Il peut être souhaité de pouvoir fixer l'écran à la fois sur une embase mobile et sur une embase fixe, destinée à être solidarisée de façon fixe à la caisse du véhicule, ce qui s'avère délicat étant donné que les embases fixe et mobile débattent l'une par rapport à l'autre.

L'invention a pour but de proposer un agencement permettant de réaliser une fixation d'écran à la fois sur deux embases fixe et mobile.

A cet effet, et selon un premier aspect, l'invention propose un système de fixation d'un écran de protection acoustique sous un véhicule automobile, ledit système comprenant successivement, de haut en bas :
- une embase mobile, destinée à être solidarisée à la caisse dudit véhicule de manière à pouvoir débattre dans toutes les directions,
- une zone dudit écran formant zone de fixation, ladite zone étant pourvue d'un orifice,
- une rondelle inférieure s'étendant en face inférieure dudit écran autour dudit orifice,
- un organe allongé de fixation dudit écran à ladite embase, ledit organe présentant une première extrémité fixée sur ladite embase et une deuxième extrémité pourvue d'une collerette prenant appui sur ladite rondelle inférieure,
ledit système présentant en outre les caractéristiques suivantes :
- il comprend en outre une rondelle supérieure s'étendant en face supérieure dudit écran autour dudit orifice,
- lesdites rondelles sont pourvues de moyens d'emboitement réciproques issus de matière, de manière à former des rondelles emboitables, lesdits moyens assurant leur fixation l'une à l'autre au travers dudit orifice, de sorte que lesdites rondelles emboitables une fois emboitées forment un élément intermédiaire de fixation logeant ladite zone de fixation entre lesdites rondelles,
- l'épaisseur de ladite zone de fixation est inférieure à l'écart entre lesdites rondelles, de manière à permettre un débattement vertical entre ladite zone et ledit élément,
- ledit élément présente au niveau dudit orifice une section moindre que la taille dudit orifice, de manière à permettre un débattement horizontal dans toutes les directions entre ladite zone et ledit élément.

Dans cette description, les termes de positionnement dans l'espace (supérieur, inférieur, vertical, horizontal, ...) sont pris en référence au référentiel du véhicule.

On précise ici que le débattement dont il est question, qu'il soit horizontal ou vertical, est un débattement libre de toute entrave - qui pourrait résulter par exemple de l'action d'un joint en caoutchouc ou d'un ressort -, ceci afin de permettre un mouvement relatif sans contrainte entre l'écran et l'embase mobile.

En particulier, un simple jeu de montage ne permettant pas une telle liberté de mouvement ne saurait entrer dans le cadre de cette définition.

Avec l'agencement proposé, l'écran est fixé à l'embase mobile de façon à pouvoir débattre dans toutes les directions par rapport à elle, ce qui permet, on le verra par la suite, d'envisager sa fixation à la fois sur une telle embase mobile et sur une embase fixe.

Selon d'autres aspects, l'invention propose une architecture de montage d'un tel écran et un écran équipé pour une telle architecture.

D'autres particularités et avantages de l'invention apparaîtront dans la description qui suit, faite en référence aux figures jointes, dans lesquelles :

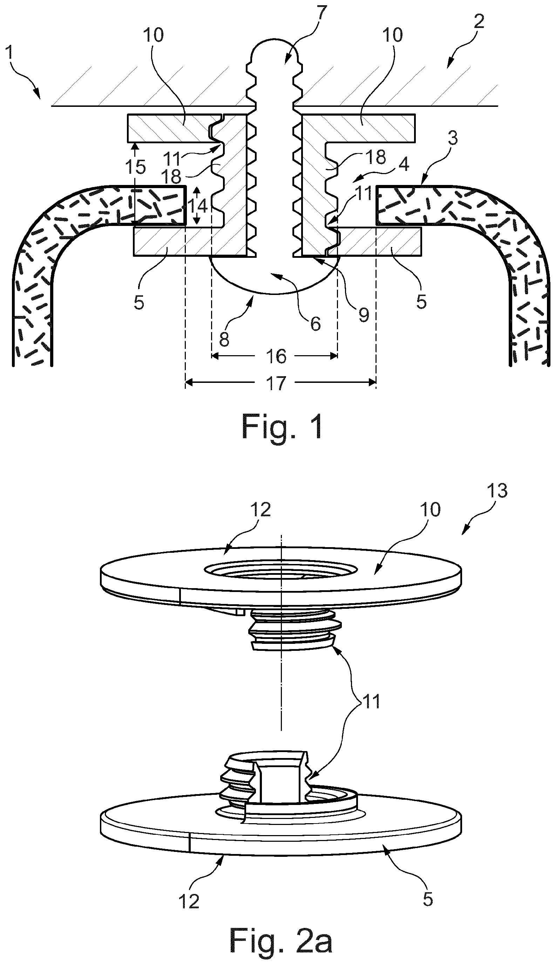

[Fig.1] est une vue schématique en coupe d'un système selon une réalisation, [Fig.2a] et

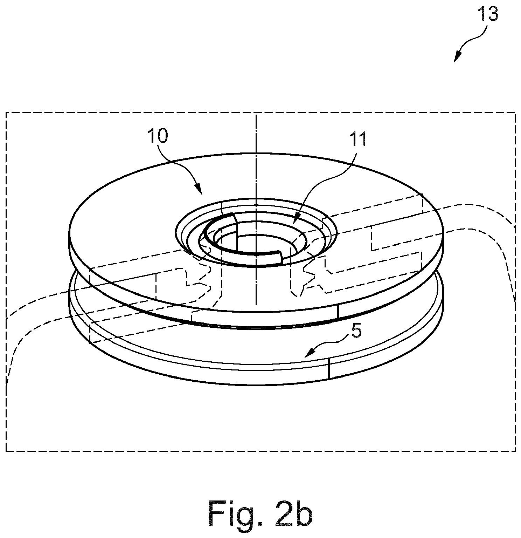

[Fig.2b] sont des vues schématiques en perspective éclatée (figure 2a) et non éclatée (figure 2b) d'un élément intermédiaire de fixation pour le système de la figure 1.

En référence aux figures, on décrit un système 1 de fixation d'un écran de protection acoustique - par exemple à base de matériau fibreux thermocomprimé ou de matériau plastique moulé - sous un véhicule automobile, ledit système comprenant successivement, de haut en bas :
- une embase mobile 2 - notamment métallique, par exemple sous forme de train arrière roulant -, destinée à être solidarisée à la caisse dudit véhicule de manière à pouvoir débattre dans toutes les directions,
- une zone dudit écran formant zone de fixation 3, ladite zone étant pourvue d'un orifice 4,
- une rondelle inférieure 5 - notamment en matériau plastique moulé - s'étendant en face inférieure dudit écran autour dudit orifice,
- un organe 6 - en matériau métallique, par exemple sous forme de vis, ou en matériau plastique - allongé de fixation dudit écran à ladite embase, ledit organe présentant une première extrémité 7 fixée sur ladite embase - présentant par exemple un pas de vis - et une deuxième extrémité 8 pourvue d'une collerette 9 prenant appui sur ladite rondelle inférieure,
ledit système présentant en outre les caractéristiques suivantes :
- il comprend en outre une rondelle supérieure 10 - notamment en matériau plastique moulé - s'étendant en face supérieure dudit écran autour dudit orifice,
- lesdites rondelles sont pourvues de moyens d'emboitement réciproques 11 issus de matière - notamment moulés d'un bloc avec lesdites rondelles -, de manière à former des rondelles emboitables 12, lesdits moyens assurant leur fixation l'une à l'autre au travers dudit orifice, de sorte que lesdites rondelles emboitables une fois emboitées forment un élément intermédiaire de fixation 13 logeant ladite zone de fixation entre lesdites rondelles,
- l'épaisseur 14 de ladite zone de fixation est inférieure à l'écart 15 entre lesdites rondelles, de manière à permettre un débattement vertical entre ladite zone et ledit élément,
- ledit élément présente au niveau dudit orifice une section 16 moindre que la taille 17 dudit orifice, de manière à permettre un débattement horizontal dans toutes les directions entre ladite zone et ledit élément.

Selon une réalisation, le débattement vertical est compris entre 1 et 5 mm.

Selon une réalisation, le débattement horizontal est compris entre 1 et 5 mm,

Selon la réalisation représentée, les rondelles emboitables 12 inférieure et supérieure sont identiques - ce qui permet une simplification et une réduction des coûts -, les moyens d'emboitement 11 étant définis par le fait que chacune desdites rondelles emboitables comprend une saillie verticale 18 s'étendant selon un demi-cylindre creux et venant s'emboiter dans l'autre desdites rondelles, les saillies 18 étant décalées d'un demi-tour l'une par rapport à l'autre.

On décrit à présent, de façon non représentée, une architecture de montage d'un écran de protection acoustique sous un véhicule automobile, ladite architecture comprenant :
- une embase fixe destinée à être solidarisée de façon fixe à la caisse dudit véhicule,
- une embase mobile 2,
- ledit écran qui est fixé de manière fixe à ladite embase fixe,
ledit écran étant en outre fixé de manière mobile sur ladite embase mobile par au moins un système 1 tel que décrit précédemment.

On décrit enfin un écran équipé pour une telle architecture, ledit écran comprenant :
- une zone de fixation 3, ladite zone étant pourvue d'un orifice 4,
- un élément intermédiaire de fixation 13 logeant ladite zone de fixation entre les rondelles 5,10,
sachant que :
- l'épaisseur 14 de ladite zone de fixation est inférieure à l'écart 15 entre lesdites rondelles, de manière à permettre un débattement vertical entre ladite zone et ledit élément,
- ledit élément présente au niveau dudit orifice une section 16 moindre que la taille 17 dudit orifice, de manière à permettre un débattement horizontal dans toutes les directions entre ladite zone et ledit élément.

## Revendications

1. Système (1) de fixation d'un écran de protection acoustique sous un véhicule automobile, ledit système comprenant successivement, de haut en bas :
• une embase mobile (2), destinée à être solidarisée à la caisse dudit véhicule de manière à pouvoir débattre dans toutes les directions,
• une zone dudit écran formant zone de fixation (3), ladite zone étant pourvue d'un orifice (4),
• une rondelle inférieure (5) s'étendant en face inférieure dudit écran autour dudit orifice,
• un organe (6) allongé de fixation dudit écran à ladite embase, ledit organe présentant une première extrémité (7) fixée sur ladite embase et une deuxième extrémité (8) pourvue d'une collerette (9) prenant appui sur ladite rondelle inférieure,
ledit système étant **caractérisé en ce que** :
• il comprend en outre une rondelle supérieure (10) s'étendant en face supérieure dudit écran autour dudit orifice,
• lesdites rondelles sont pourvues de moyens d'emboitement réciproques (11) issus de matière, de manière à former des rondelles emboitables (12), lesdits moyens assurant leur fixation l'une à l'autre au travers dudit orifice, de sorte que lesdites rondelles emboitables une fois emboitées forment un élément intermédiaire de fixation (13) logeant ladite zone de fixation entre lesdites rondelles,
• l'épaisseur (14) de ladite zone de fixation est inférieure à l'écart (15) entre lesdites rondelles, de manière à permettre un débattement vertical entre ladite zone et ledit élément,
• ledit élément présente au niveau dudit orifice une section (16) moindre que la taille (17) dudit orifice, de manière à permettre un débattement horizontal dans toutes les directions entre ladite zone et ledit élément.

2. Système selon la revendication 1, **caractérisé en ce que** le débattement vertical est compris entre 1 et 5 mm.

3. Système selon l'une des revendications précédentes, **caractérisé en ce que** le débattement horizontal est compris entre 1 et 5 mm.

4. Système selon l'une quelconque des revendications précédentes, **caractérisé en ce que** les rondelles emboitables (12) inférieure et supérieure sont identiques, les moyens d'emboitement (11) étant définis par le fait que chacune desdites rondelles emboitables comprend une saillie verticale (18) s'étendant selon un demi-cylindre creux et venant s'emboiter dans l'autre desdites rondelles, les saillies (18) étant décalées d'un demi-tour l'une par rapport à l'autre.

5. Architecture de montage d'un écran de protection acoustique sous un véhicule automobile, ladite architecture comprenant :
• une embase fixe, destinée à être solidarisée de façon fixe à la caisse dudit véhicule,
• une embase mobile (2),
• ledit écran qui est fixé de manière fixe à ladite embase fixe,
ladite architecture étant **caractérisée en ce que** ledit écran est en outre fixé de manière mobile sur ladite embase mobile par au moins un système (1) selon l'une quelconque des revendications précédentes.

6. Ecran équipé pour une architecture selon la revendication précédente, ledit écran comprenant :
• une zone de fixation (3), ladite zone étant pourvue d'un orifice (4),
• un élément intermédiaire de fixation (13) logeant ladite zone de fixation entre les rondelles (5,10),
sachant que :
• l'épaisseur (14) de ladite zone de fixation est inférieure à l'écart (15) entre lesdites rondelles, de manière à permettre un débattement vertical entre ladite zone et ledit élément,
• ledit élément présente au niveau dudit orifice une section (16) moindre que la taille (17) dudit orifice, de manière à permettre un débattement horizontal dans toutes les directions entre ladite zone et ledit élément.
